# EUROPEAN PATENT APPLICATION

(11) **EP 4 485 607 A1**
(43) Date of publication of application: **01.01.2025**
(21) Application number: 23880190.6
(22) Date of filing: 17.10.2023
(51) Int. Cl.: H01M 10/0583, H01M 4/134, H01M 50/533, H01M 10/052

(54) **ELECTRODE ASSEMBLY AND ELECTROCHEMICAL ELEMENT COMPRISING SAME**

(30) Priority: 21.10.2022 KR 20220136207; 26.07.2023 KR 20230097399
(71) Applicant: LG Energy Solution, Ltd., Seoul 07335 (KR)
(72) Inventor: KWON, Soon Kwan, Daejeon 34122 (KR); LEE, Changhoon, Daejeon 34122 (KR); LEE, Hyunsoo, Daejeon 34122 (KR); LEE, Junghoon, Daejeon 34122 (KR); LEE, Jong Yoon, Daejeon 34122 (KR)
(74) Representative: Goddar, Heinz J.
(86) International application number: PCT/KR2023/016076
(87) International publication number: WO 2024/085613

(57) **Abstract**

An electrode assembly including a negative electrode structure and a plurality of positive electrodes is provided. The negative electrode structure includes first and second separating films, and a lithium metal layer interposed between the first and second separating films. The negative electrode structure includes a plurality of stack portions and a plurality of folding portions. The electrode assembly has a structure in which the stack portion of the negative electrode structure and the positive electrode are stacked alternately and sequentially. The negative electrode includes a plurality of negative electrode tabs protruding from the negative electrode structure more than the first and second separating films in a width direction. The number of the negative electrode tabs is at least one less than the number of stack portions of the negative electrode structure. An electrode assembly according to one embodiment of the present invention can reduce the number of negative electrode tabs, thereby improving productivity in subsequent processes, such as a welding process of the negative electrode tabs.

## Description

### [Technical Field]

The present invention relates to an electrode assembly and an electrochemical device comprising the same. Specifically, the present invention relates to an electrode assembly utilizing a negative electrode structure with lithium metal interposed between two separating films, wherein the number of negative electrode tabs is reduced such that the number of negative electrode tabs is at least one less than the number of stack portions of the negative electrode structure, and an electrochemical device comprising the same.

This application claims the benefit of priority to Korean Patent Application No. 10-2022-0136207 filed on October 21, 2022, and Korean Patent Application No. 10-2023-0097399 filed on July 26, 2023, and all contents of which are incorporated as a part of the present specification.

### [Background Art]

In recent years, there has been a growing interest in energy storage technology. As application areas are expanding to the range from mobile phones, camcorders and laptop PCs to energy for electric vehicles, efforts for research and development are being embodied. In this regard, electrochemical devices are one of the most promising areas, and especially, the development of secondary batteries is drawing attention as the batteries with miniaturization and light weight, and capable of charging and discharging with high capacity, in light of the recent trend toward miniaturization and light weight of electronic devices.

Secondary batteries are also categorized by the structure of the electrode assembly consisting of positive electrode/separating film/negative electrode. For example, electrode assemblies are categorized into jelly-roll (wound) electrode assemblies, which are the wound long sheet of positive electrodes and negative electrodes with separating films, and stacked electrode assemblies, wherein multiple positive electrodes and negative electrodes cut into predetermined sized units with separating films are stacked sequentially.

However, these conventional electrode assemblies suffer from several problems.

First, the jelly-roll electrode assembly is made by winding the long sheet of positive electrodes and negative electrodes in a dense state, thereby to have a cylindrical or elliptical cross-section. In such a structure, stresses caused by the expansion and contraction of the electrodes during charge and discharge accumulate in the electrode assembly, and when such stress accumulation exceeds a certain limit, deformation of the electrode assembly occurs. Furthermore, the deformation of the electrode assembly may cause uneven spacing between the electrodes, resulting in a sharp decrease in the performance of the battery, and an internal short circuit may occur, threatening the safety of the battery. Furthermore, since the jelly-roll electrode assembly requires winding a long sheet of the positive electrodes and negative electrodes, it is difficult to wind the positive electrodes and negative electrodes quickly while maintaining a constant spacing between the positive electrodes and negative electrodes, resulting in a decrease in productivity.

Second, the stackable electrode assembly requires sequential stacking of multiple positive electrodes and negative electrode units. In this process, since a separate electrode plate transfer process is required to manufacture the unit, and the sequential stacking process requires a lot of time and effort, the stackable electrode assembly has the problem of low productivity.

To solve these problems, a stackable-foldable electrode assembly with an advanced structure that is a hybrid of the jelly-roll type and stackable type has been developed. The stackable-foldable electrode assembly has a structure in which bi-cells or full cells stacked with separating films between the positive electrodes and negative electrodes of a predetermined unit are wound using a long continuous separating film sheet (foldable separating film).

The stackable-foldable electrode assembly typically connects the electrodes of each layer by extending separating films that are easier to fold, rather than extending the electrodes. In this process, the electrodes of each layer are supplied in a cut state for formation of the electrode assembly, as in the stacked electrode assembly. In the relevant art, if the secondary battery is composed of materials that are not easily cut or folded among a variety of conventional electrode materials for secondary batteries in the art, the general stackable-foldable electrode assembly is more suitable. On the other hand, lithium metal, which is well-known as a negative electrode material for secondary batteries in the art, may not be suitable for conventional stackable-foldable electrode assemblies because it is not easy to be processed by, such as, cutting, due to its physical properties such as high ductile and viscosity, and it is relatively easy to be folded.

After continuous research on the structure of the electrode assembly, the inventor(s) of the present invention has designed a structure suitable for forming a negative electrode tab in a stackable-foldable electrode assembly with a novel structure utilizing a negative electrode structure including a negative electrode containing lithium metal interposed between two separating films, and has completed the present invention.

### [patent reference]

(Patent reference 1) Korean Patent No. 10-2023530

### [Disclosure]

### [Technical Problem]

The present invention seeks to provide an electrode assembly with appropriately arranged negative electrode tabs, in a stackable-foldable electrode assembly with a novel structure utilizing a negative electrode structure having a negative electrode comprising lithium metal interposed between two separating films, and an electrochemical device comprising same.

### [Technical Solution]

According to a first aspect of the present invention, the present invention provides an electrode assembly comprising a negative electrode structure and a plurality of positive electrodes.

In one embodiment of the present invention, the negative electrode structure includes first and second separating films, and a lithium metal layer interposed between the first and second separating films.

In one embodiment of the present invention, the negative electrode structure comprises a plurality of stack portions and a plurality of folding portions.

In one embodiment of the present invention, the electrode assembly has a structure in which a stack portion of the negative electrode structure and a positive electrode are stacked alternately and sequentially.

In one embodiment of the present invention, the negative electrode includes a plurality of negative electrode tabs projecting from the negative electrode structure in the width direction more than the first and second separating films.

In one embodiment of the present invention, the number of the negative electrode tabs is at least one less than the number of stack portions of the negative electrode structure.

In one embodiment of the present invention, the negative electrode tab is integrally formed with the remaining portion of the negative electrode.

In one embodiment of the present invention, the plurality of negative electrode tabs are located at only one end of the two ends in the width direction of the negative electrode structure, and are located side by side in the height direction of the electrode assembly.

In one embodiment of the present invention, the positive electrode includes a positive electrode tab protruding from the negative electrode structure in the width direction more than the first and second separating films.

In one embodiment of the present invention, the negative electrode tabs are located on the stack portion of the negative electrode structure, and there is at least one stack portion without negative electrode tabs between stack portions having negative electrode tabs.

In one embodiment of the present invention, one of the plurality of negative electrode tabs is located at a stack portion of the uppermost negative electrode structure, and the other of the plurality of negative electrode tabs is located at a stack portion of the bottommost negative electrode structure.

In one embodiment of the present invention, at least one of the plurality of negative electrode tabs is a negative electrode tab of a structure extending longitudinally from a stack portion to the neighboring stack portion.

In one embodiment of the present invention, two or more negative electrode tabs are not located on one stack portion of the negative electrode structure in the electrode assembly.

In one embodiment of the present invention, for the stack portion of the negative electrode structure where the negative electrode tab is located in the electrode assembly, the length of the negative electrode tab is 50% or less of the length of the stack portion.

In one embodiment of the present invention, the length of the folded portion in the negative electrode structure is from 2 to 10 times the sum of the thicknesses of the positive electrode and negative electrode structures.

According to a second aspect of the present invention, the present invention provides an electrochemical device comprising the electrode assembly described above.

In one embodiment of the present invention, the electrochemical device is a lithium secondary battery.

### [Effects of the present invention]

An electrode assembly according to one embodiment of the present invention can be applied to an electrode assembly in which the negative electrodes are continuously connected in a negative electrode structure, allowing free placement of negative electrode tabs on the negative electrodes. In one embodiment of the present invention, the number of negative electrode tabs can be reduced compared to conventional electrode assemblies that typically include at least one negative electrode tab in one layer of the electrode assembly, which can improve productivity in subsequent processes, such as welding processes of the negative electrode tabs. Furthermore, in an electrode assembly according to one embodiment of the present invention, even if some of the welded negative electrode tabs fail, other negative electrode tabs can compensate it. In an electrode assembly according to one embodiment of the present invention, reducing the number of negative electrode tabs does not significantly affect the performance of the battery; rather, an improvement in energy density per weight can be expected by minimizing the number of negative electrode tabs.

### [Description of Drawings]

FIG. 1 is a schematic plan view of a negative electrode including a negative electrode tab, in accordance with one embodiment of the present invention.
FIG. 2 is a schematic drawing of a negative electrode structure according to one embodiment of the present invention. FIG. 2a is a perspective view schematically illustrating an isolated view of each layer of a negative electrode structure according to one embodiment of the present invention. FIG. 2b is a plan view schematically illustrating a negative electrode structure according to one embodiment of the present invention. FIG. 2c is a front view schematically illustrating a negative electrode structure according to one embodiment of the present invention.
FIGS. 3 and 4 are front views schematically illustrating an electrode assembly according to one embodiment of the present invention. FIGS. 3 and 4 schematically illustrate exemplary positions of the negative electrode tabs by placing the negative electrode tabs at the front.
FIG. 5 is a zoomed-in schematic front view of a folding portion of an electrode assembly according to one embodiment of the present invention.

### [Best Mode]

The detail of the embodiment of the present invention is provided in the following descriptions. It should be noted that in assigning reference numerals to the components in each drawing, identical components, even in different drawings, are given the same numerals as much as possible. In addition, in describing the embodiments, if a detailed description on a related known constitution or feature is deemed to interfere with an understanding of the embodiments, the detailed description is omitted.

In addition, terms such as first, second, A, B, (a), (b), and the like may be used to describe components of the embodiments. Such terms are intended only to distinguish one component from another, and the nature, sequence or order of such components is not limited by such terms. When a component is described as being "connected," "coupled," or "abutted" to another component, it is to be understood that the component may be directly connected or contacted to the other component, but another component may be "connected," "coupled," or "abutted" between these components.

Components included in one embodiment, and components having common functions, are described using the same terms in other embodiments. Unless otherwise indicated, descriptions in one embodiment may be applied to other embodiments, and specific descriptions which are redundant are omitted.

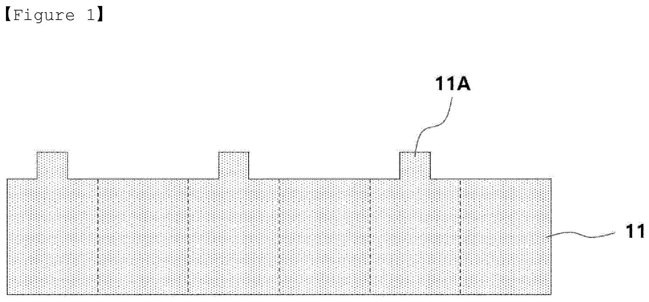

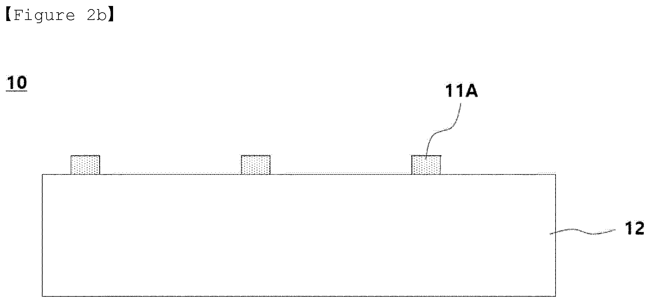

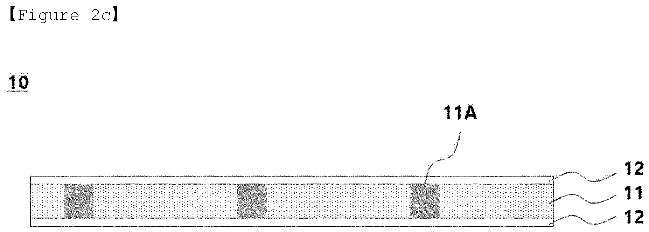

As used herein, the term "longitudinal direction" means a side-to-side direction in plan views such as FIGS. 1 and 2b and frontal views such as FIGS. 2c, 3, 4 and 5. The term "width direction" indicates an up-and-down direction in plan views such as FIGS. 1 and 2b, and an indistinguishable back-and-forth direction in frontal views such as FIGS. 2c, 3, 4 and 5. The term "height direction" indicates an indistinguishable back-and-forth direction in plan views such as FIGS. 1 and 2b, and an up-and-down direction in frontal views such as FIGS. 2c, 3, 4 and 5.

The present invention relates to an electrode assembly, and provides a stackable-foldable electrode assembly of a novel structure utilizing a negative electrode structure having a negative electrode comprising lithium metal interposed between two separating films, wherein the negative electrode tabs are appropriately arranged. The electrode assembly according to one embodiment of the present invention utilizes a negative electrode structure with negative electrodes continuously connected to the electrode assembly, allowing free placement of negative electrode tabs on the negative electrodes. In one embodiment of the present invention, the number of negative electrode tabs can be reduced compared to conventional electrode assemblies that typically include at least one negative electrode tab in one layer thereof, which can improve productivity in subsequent processes such as welding of the negative electrode tabs. Furthermore, in an electrode assembly according to one embodiment of the present invention, even if some of the welded negative electrode tabs fail, other negative electrode tabs can compensate it. In an electrode assembly according to one embodiment of the present invention, reducing the number of negative electrode tabs does not significantly affect the performance of the battery; rather, an improvement in energy density per weight can be expected by minimizing the number of negative electrode tabs.

An electrode assembly according to one embodiment of the present invention includes a positive electrode, a negative electrode and a separating film. In the electrode assembly, the positive electrode and the separating film are not particularly limited as long as they are materials commonly used in the art, but the negative electrode comprises lithium metal. As used herein, lithium metal can be broadly construed even if lithium is added with a certain component or is an alloy with a certain metal, as long as it does not significantly differ in properties from lithium metal and can be applied to conventional electrode assemblies, which causes the same problems as lithium metal. As used herein, the negative electrode may be referred to as a lithium metal layer in that it includes lithium metal, and the negative electrode and the separating film may be referred to as a negative electrode structure in that they are provided as a single integral constitution.

According to one embodiment of the present invention, the negative electrode is interposed between two separating films to form a negative electrode structure. The two separating films comprising the negative electrode structure may be referred to herein as first and second separating films. The negative electrode structure has a longitudinally extending structure, and the electrode assembly includes only one negative electrode structure. A basic electrode assembly structure is formed by folding the negative electrode structure with the longitudinally extending structure and fixing a positive electrode therein.

According to one embodiment of the present invention, the negative electrode interposed in the negative electrode structure includes a plurality of negative electrode tabs protruding from the first and second separating films in a width direction. To facilitate an understanding of the structure of the negative electrode in which the negative electrode tabs are formed, FIG. 1 provides an exemplary structure of a negative electrode including negative electrode tabs. As shown in FIG. 1, the negative electrode tab (11A) refers to a portion protruding from the negative electrode (11), and such a negative electrode tab helps the negative electrode to be electrically connected. The method of manufacturing the negative electrode tab (11A) is not particularly restricted, provided that the negative electrode can be exposed to the outside of the electrode laminate to provide the functionality described above. The negative electrode tab (11A) may also be separately attached so as to have a protrusion from the negative electrode (11), but this may be undesirable in that the negative electrode may not be able to achieve a flat plane due to the increased thickness of the attached portion. According to one embodiment of the present invention, the negative electrode tab (11A) is integrally formed with the rest of the negative electrode (11). This may mean forming the negative electrode tab by cutting lithium metal, which is an exemplary raw material for the negative electrode, and thus the negative electrode tab may not be distinguished from the rest of the negative electrode by a material other than a position.

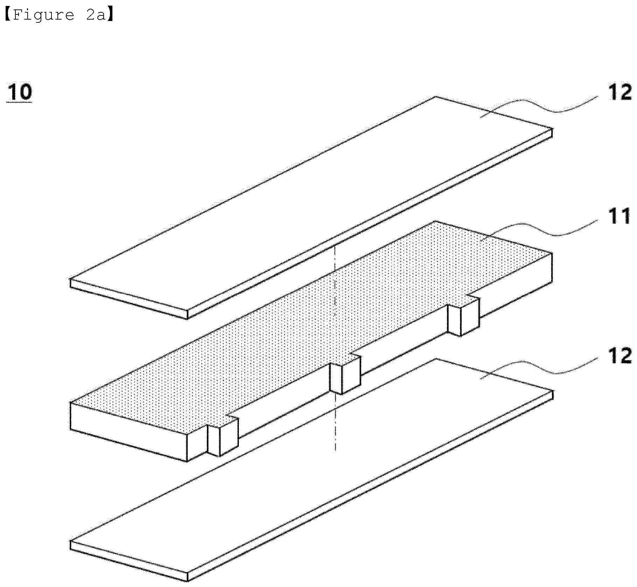

To provide an understanding of the structure of a negative electrode structure having a negative electrode interposed between two separating films, FIG. 2 provides drawings schematically illustrating a negative electrode structure according to one embodiment of the present invention. Specifically, FIG. 2a provides a view of each layer separated from the negative electrode structure, and FIGS. 2b and 2c provide views of the negative electrode structure from different positions. Since the separating film (12) completely separates the positive electrode (20) and the negative electrode (11) to prevent an electrical short from occurring when the battery is driven, the width of the separating film (12) may be the same as or longer than the width of the negative electrode (11). Here, the width of the negative electrode (11) refers to the width excluding the portion of the negative electrode tab (11A), and the negative electrode (11) may be exposed by the negative electrode tab (11A) to protrude out of the separating film (12), as shown in FIG. 2b.

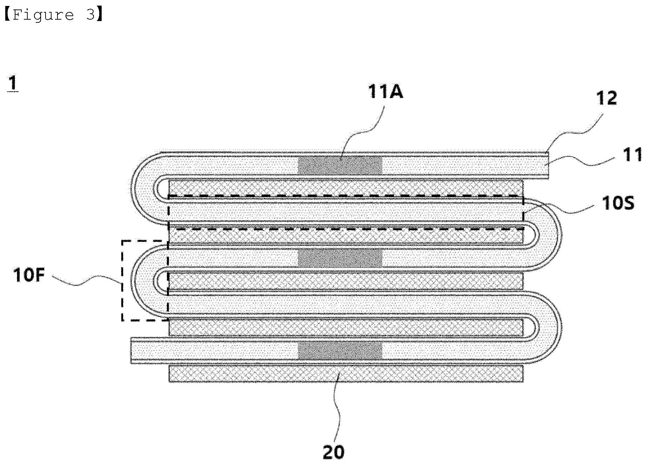

According to one embodiment of the present invention, the electrode assembly has a structure in which the negative electrode structure and the positive electrode are stacked alternately and sequentially. To facilitate understanding of the structure of the electrode assembly, FIG. 3 provides an exemplary structure of the electrode assembly. The negative electrode tab (11A), which protrudes from the separating film (12) in the width direction, may also be externally exposed in the electrode assembly.

Because an electrode assembly according to one embodiment of the present invention includes only one negative electrode structure, unlike a plurality of positive electrodes, it may be helpful to understand the invention to represent the negative electrode structures separately based on their locations. In this specification, the terms "stack portion" (10S) and "folding portion" (10F) are used to divide the negative electrode structure. According to one embodiment of the invention, the negative electrode structure (10) includes a plurality of stack portions (10S) and a plurality of folding portions (10F). In the negative electrode structure (10), the stack portions (10S) and the folding portions (10F) are units having different functionality along a length direction of the negative electrode structure (10). The stack portion (10S) and the folding portion (10F) are not differentiated by a material other than a position.

To facilitate an understanding of the position of the stack portion (10S) and the folding portion (10F), FIG. 3 shows the example of the positions of the stack portion (10S) and the folding portion (10F). The stack portion (10S) refers to the negative electrode structure (10) at the position where the positive electrodes (20) are stacked, and has a mainly straight shape as shown in FIG. 3. The folding portion (10F) may also be named a bending portion. The length of the stack portion (10S) is substantially the same as the length of the positive electrode. The folding portion (10F) refers to the negative electrode structure (10) in the position of connecting the stack portions (10S), and has a predominantly curved shape as shown in Figure 3. According to one embodiment of the present invention, in the negative electrode structure (10), the stack portion (10S) and the folding portion (10F) are located alternately. In other words, the stack portions (10S) can be separated by the folding portion (10F), and the folding portions (10F) can be separated by the stack portion (10S).

According to one embodiment of the present invention, the electrode assembly (1) includes a structure in which the stack portion (10S) of the negative electrode structure (10) and the positive electrode (20) are stacked alternately and sequentially. Since the electrode assembly (1) includes a structure in which the stack portion (10S) of the negative electrode structure (10) and the positive electrode (20) are stacked alternately and sequentially, the negative electrode structure (10) including the stack portion (10S) and the folding portion (10F) in that structure has a zigzag shape as shown in FIG. 3. In other words, the folding portions (10F), which are located sequentially from the stack portion (10S) of the negative electrode structure (10) where stacking begins, are located alternately on the left or right side of the electrode assembly (1). If the stack portion (10S) of the negative electrode structure (10) and the positive electrode (20) are not stacked alternately, and two or more stack portions or positive electrodes are stacked successively, a potential difference may not occur between the successively stacked layers, and the efficiency of the battery may be reduced.

According to one embodiment of the present invention, the number of the negative electrode tabs (11A) is at least one less than the number of stack portions (10S) of the negative electrode structure (10). In a stacked electrode assembly, a plurality of negative electrodes as well as positive electrodes are required, and since the negative electrodes of each layer are completely separated from each other, a negative electrode tab is required for each layer in order to electrically connect each layer. However, when the negative electrodes are present as a continuously connected unit, as in the present invention, there is a greater degree of freedom in the placement of the negative electrode tabs. An electrode assembly according to one embodiment of the present invention does not necessarily include one negative electrode tab (11A) on one negative electrode layer. In the electrode assembly, one negative electrode layer may mean one stack portion (10S), which does not necessarily have one negative electrode tab (11A), but may be electrically connected via the folding portion (10F) to a stack portion (10S) having a negative electrode tab (11A).

According to one embodiment of the present invention, the plurality of negative electrode tabs (11A) are located at only one end of both ends in the width direction of the negative electrode structure (10), and are located side by side in the height direction of the electrode assembly (1). The plurality of negative electrode tabs (11A) are electrically connected to components outside the electrode assembly. In this case, the structure of the electrode assembly (1) can be further simplified by connecting the negative electrode tabs (11A) of each layer together. By positioning the negative electrode tabs (11A) of each layer side by side in the height direction of the electrode assembly (1), it is easy to connect the negative electrode tabs of each layer together, for example, by welding. In this specification, positioning side by side in the height direction means that the negative electrode tabs of each layer can overlap each other when moving in the height direction, which is not strictly required to be completely overlapped.

According to one embodiment of the present invention, the positive electrode (20) comprises a positive electrode tab protruding from the negative electrode structure (10). The positive electrode tabs are positioned to protrude from the negative electrode structure (10) in the longitudinal direction or width direction, and through the protruding positive electrode tabs, the positive electrodes (20) of the electrode assembly (1) can be electrically connected. Since the positive electrode (20) is made of a different material, the tabs are not formed in the same manner as the negative electrode tabs according to one embodiment of the present invention, and are not particularly limited to those commonly used in the art. For example, the positive electrode, unlike the negative electrode, may include a positive electrode active material that is not a single material and a positive electrode current collector that supports the positive electrode active material, and the positive electrode tab may be formed by cutting the positive electrode current collector. In this specification, the positive electrode tab is viewed as one constitution included in the positive electrode (20), and refers to a portion protruding from the separating film (12) of the negative electrode structure (10) in the width direction.

According to one embodiment of the present invention, the negative electrode tab (11A) is located on a stack portion (10S) of the negative electrode structure (10), and there is at least one stack portion (10S) without the negative electrode tab (11A) between the stack portions (10S) having the negative electrode tab (11A). The negative electrode (11) may be electrically connected via the negative electrode tab (11A), such that the extent to which the negative electrode (11) may be electrically connected via the negative electrode tab (11A) may be both sides longitudinally relative to the negative electrode tab (11A). Accordingly, the presence of a negative electrode tab (11A) on each successive layer may be an inefficient arrangement in terms of reducing the number of negative electrode tabs (11A). In view of this, it may be desirable that once one negative electrode tab (11A) is present, the following negative electrode tabs (11A) are spaced apart by a certain interval.

According to one embodiment of the present invention, one of the plurality of negative electrode tabs (11A) is located on the stack portion (10S) of the negative electrode structure (10) of the top layer, and the other of the plurality of negative electrode tabs (11A) is located on the stack portion (10S) of the negative electrode structure (10) of the bottom layer. Here, the top layer and the bottom layer are determined relative to the stack portion (10S) of the negative electrode structure (10). Thus, if the positive electrode (20) is located on the stack portion (10S) of the negative electrode structure (10) of the top layer, the stack portion (10S) of the negative electrode structure (10) may not be the top layer relative to the electrode assembly (1). Likewise, if the positive electrode (20) is located below the stack portion (10S) of the lowermost negative electrode structure (10), the stack portion (10S) of the negative electrode structure (10) may not be the lowermost layer relative to the electrode assembly (1). Positioning the negative electrode tabs (11A) on the top and bottom layers, and supplementing the negative electrode tabs (11A) where there is a lack of electrical connection may facilitate positioning of the negative electrode tabs (11A), in consideration of the entire electrode assembly (1).

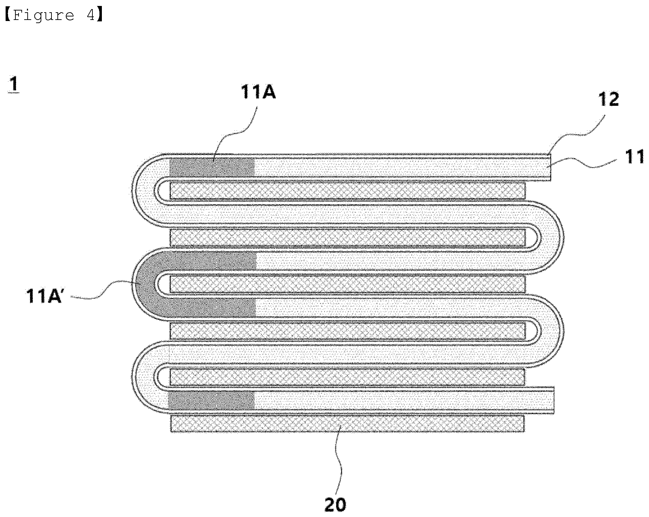

According to one embodiment of the present invention, at least one of the plurality of negative electrode tabs (11A) is a negative electrode tab with a structure extending longitudinally from a stack portion (10S) to the adjacent stack portion (10S). In order for the negative electrode tab (11A) to extend from the one stack portion (10S) to the neighboring stack portion (10S), one stack portion (10S) and the other stack portion (10S) are connected by a folding portion (10F), and the negative electrode tab (11A) passes through the entire of the folding portion (10F). For better understanding of the structure of the longitudinally extending negative electrode tab, FIG. 4 provides a schematic drawing of an electrode assembly according to one embodiment of the present invention. In FIG. 4, a negative electrode tab (11A') of the longitudinally extending structure is located between the negative electrode tab (11A) located at the top layer and the negative electrode tab (11A) located at the bottom layer. The negative electrode tab (11A) of the longitudinally extending structure can be utilized to compensate for the relatively weak connection of the negative electrodes in terms of directly connecting the stack portion (10S) of the two layers with the negative electrode tab (11A). The negative electrode tab (11A') of the longitudinally extending structure may also be positioned side by side with the general negative electrode tab (11A) or another negative electrode tab (11A') of the same longitudinally extending structure in the height direction of the electrode assembly, so that the negative electrode tabs of each layer may be connected together by welding.

According to one embodiment of the present invention, two or more negative electrode tabs (11A) are not located on the stack portion (10S) of one negative electrode structure (10) in the electrode assembly (1). As described above, the negative electrode (11) may be electrically connected via the negative electrode tabs (11A), such that the extent to which the negative electrode (11) may be electrically connected via the negative electrode tabs (11A) may be both sides longitudinally relative to the negative electrode tabs (11A). Thus, the presence of more than two negative electrode tabs (11A) in one layer may be an inefficient arrangement in terms of reducing the number of negative electrode tabs (11).

In the electrode assembly (1) according to one embodiment of the present invention, the length of the negative electrode tab (11A) may be suitably adjusted by taking into consideration the length of the stack portion (10S). The length is relative to the longitudinal direction of the negative electrode structure (10). According to one embodiment of the present invention, for the stack portion of the negative electrode structure on which the negative electrode tab is located in the electrode assembly, the length of the negative electrode tab is 50% or less of the length of the stack portion. This may mean less than or equal to 50% of the length of a layer of negative electrode structures when a plurality of truncated negative electrode structures are applied. Specifically, the length of the negative electrode tab may be 50% or less, 45% or less, 40% or less, 35% or less, 30% or less, of the length of the stack portion. Forming the length of the negative electrode tabs to be too long may defeat the purpose of minimizing negative electrode tabs in the present invention, and may not facilitate placement with other constitutions in the electrode assembly.

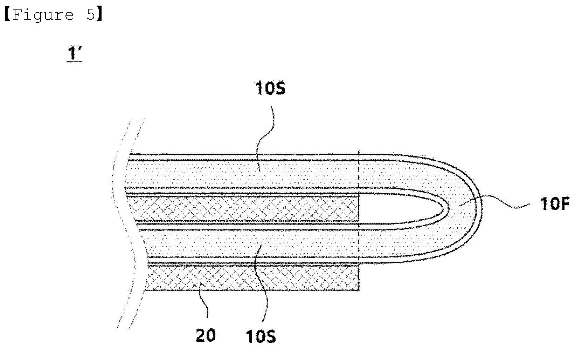

In order to reduce the negative electrode tab (11A) according to one embodiment of the present invention, it may be important that the negative electrode (11) is well connected without breaking in the folding portion (10F). In this case, adjusting the length of the folding portion (10F) may be beneficial for a stable structure of the negative electrode (11) within the folding portion (10F). To provide a better understanding of the length of the folding portion (10F) in the negative electrode structure (10), FIG. 5 provides a zoomed-in drawing of a portion of the folding portion (10F) in the electrode assembly (1). According to one embodiment of the present invention, the length of the folding portion (10F) in the negative electrode structure (10) is from 2 to 10 times the sum of the thicknesses of the positive electrode (20) and the negative electrode structure (10). The length of the folding portion (10F) means the length of the curve of the folding portion. In a curve, since the lengths of the inner and outer sides may be different from each other, the length of the center portion is measured. For example, the length can be measured by cutting the portion indicated by the dotted line in FIG. 5 and then unfolding it. Specifically, the length of the folding portion (10F) may be 2 times or more, 2.5 times or more, 3 times or more, 3.5 times or more, 4 times or more, 10 times or less, 9.5 times or less, 9 times or less, 8.5 times or less, 8 times or less, 2 to 10 times, 3 to 9 times, 4 to 8 times the sum of the thickness of the positive electrode (20) and the negative electrode structure (10). When the length of the folding portion (10F) is adjusted within the range, the defect of the folding portion in the electrode assembly can be reduced.

According to one embodiment of the present invention, the negative electrode structure (10) further includes a wrapping portion (not shown in the drawing) in addition to the stack portion (10S) and the folding portion (10F). By wrapping the stacking part of the positive electrode and the negative electrode structure once with the wrapping portion, the electrode assembly can have a more stable structure. The wrapping portion may have straight and curved shapes. In an electrode assembly according to one embodiment of the present invention, the stacking part of the positive electrode and the negative electrode structure are surrounded by a wrapping portion of the negative electrode structure, and the wrapping portion may comprise one or more tabs. The tabs located on the wrapping portion may be located side by side with the rest of the tabs in a height direction of the electrode assembly.

According to one embodiment of the present invention, the positive electrode (20) comprises a positive electrode active material layer and a current collector supporting the positive electrode active material layer. The positive electrode (20) has a structure in which a positive electrode active material layer is formed on at least one side, more specifically both sides of the current collector. The positive electrode active material layer comprises a positive electrode active material and may further comprise a conductive material, a binder and an additive. The current collector, positive electrode active material, conductive material, binder or additive is not particularly limited as long as it is commonly used in the art.

The positive electrode current collector supports the positive electrode active material and is not particularly limited to having a high conductivity without causing any chemical changes in the battery. According to one embodiment of the present invention, the positive electrode current collector may be made of copper, stainless steel, aluminum, nickel, titanium, palladium, calcined carbon, copper or stainless steel whose surface is treated with carbon, nickel or silver, or aluminum-cadmium alloy.

The positive electrode current collector can form microscopic irregularities on its surface to strengthen the binding with the positive electrode active material, and various forms can be used, such as films, sheets, foils, meshes, nets, porous materials, foams, non-woven materials, etc.

As the positive electrode active material, a lithium-containing transition metal oxide may be used. According to one embodiment of the present invention, any one or a mixture of the two or more selected from the group consisting of LiCoO₂, LiNiO₂, LiMnO₂, LiMn₂O₄, Li (NiₐCo_{b}Mn_{c})O₂ (wherein 0<a<1, 0<b<1, 0<c<1, and a+b+c=1), LiNi_{1-y}Co_{y}O₂ (wherein 0<y<1), LiCo_{1-y}Mn_{y}O₂ (wherein 0<y<1), LiNi_{2-y}Mn_{y}O₂ (wherein 0<y<1), Li (NiₐCo_{b}Mn_{c}) O₄ (wherein 0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), LiCoPO₄ and LiFePO₄. In addition to these oxides, sulfides, selenides or halides can be used.

The positive electrode active material may comprise a sulfur compound. According to one embodiment of the present invention, the sulfur compound may be at least one selected from the group consisting of elemental sulfur (S₈), organosulfur compound Li₂Sₙ (wherein n≥1), and carbon-sulfur polymer ((C₂Sₓ)ₙ, wherein x is 2.5 to 50, and n≥1). Preferably, inorganic sulfur (S₈) may be used.

When the positive electrode active material comprises a sulfur compound, the electrode assembly (1) according to one embodiment of the present invention can be applied to a lithium-sulfur battery. Since the sulfur itself contained in the positive electrode active material is not electrically conductive, it may be used in combination with a conductive material such as a carbon material. Accordingly, the sulfur is included in the form of a sulfur-carbon composite, and preferably, the positive electrode active material may be a sulfur-carbon composite.

In view of the foregoing, the positive electrode (20) is relatively less easily folded and more easily cut compared to the negative electrode. Thus, the positive electrode (20) may be cut to a suitable size so that a plurality of positive electrodes are applied to the interior of the electrode assembly (1) .

According to one embodiment of the present invention, the negative electrode (11) does not include a current collector supporting the lithium metal layer. Since the negative electrode (11) does not include a current collector, the loading amount of the negative electrode active material within the electrode assembly can be improved, which can contribute to improved performance of the battery. When the negative electrode (11) is mainly composed of lithium metal, it may not be easy to process, such as cutting, because the lithium metal is highly ductile and viscous, but in the electrode assembly (1) according to one embodiment of the present invention, the processability can be improved by minimizing cutting while the negative electrode is applied in the form of the negative electrode structure (10). The lithium metal layer according to one embodiment of the present invention may be a free-standing lithium metal layer that can retain the shape to a certain level by itself.

The separating film (12) covering both sides of the negative electrode (11) in the negative electrode structure (10) is not particularly limited in terms of type, provided that it does not include a binder on its surface. The separating film (12) may be a nonwoven or polyolefin-based porous material made of, for example, a glass fiber having a high melting point or a polyethylene terephthalate fiber, but is not limited thereto. Since the separating film (12) is much more processable than the negative electrode (11) of lithium metal, in the present invention, the negative electrode tabs are manufactured by notching the separating film (12).

The material of the porous material is not particularly limited in the present invention, but any porous material conventionally used in electrochemical devices can be used. According to one embodiment of the present invention, the porous material may include at least one selected from the group consisting of polyolefin such as polyethylene or polypropylene, polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

According to one embodiment of the present invention, the lengths of the negative electrode (11) and the first and second separating films (12) in the negative electrode structure (10) are the same. In manufacturing an electrode assembly, with reference to the last negative electrode structure (10), the separating film located on the exterior of the electrode assembly (1) may be named the first separating film, and the separating film located on the interior of the electrode assembly (1) may be named the second separating film. The negative electrode (11) and the separating film (12) are provided to the electrode assembly (1) in the form of a negative electrode structure (10) having the negative electrode (11) interposed between the first and second separating films (12), wherein the negative electrode and the separating film are cut at one time, so that the lengths of the negative electrode (11) and the first and second separating films (12) in the negative electrode structure (10) are substantially the same. However, depending on the method of cutting the negative electrode structure (10), there may be slight differences in the lengths of the negative electrode (11) and the first and second separating films (12), and in some cases, the ends of the first and second separating films (12) may be bent toward the center of the negative electrode structure (10). According to one embodiment of the present invention, the first and second separating films are folded at the end of the negative electrode structure (10). Although the negative electrode structure (10) has substantially the same length of the negative electrode (11) and the first and second separating films (12) during the supplying process, when applied to the electrode assembly (1), the length of the lithium metal may be extended due to the ductility of the lithium metal during the folding process. According to one embodiment of the present invention, at the end of the negative electrode structure (10), the lithium metal protrudes more than the first or second separating film. Also, depending on the number of folds, the separating film located more on the outer side than on the inner side of the folding portion (10F) may be shorter. According to one embodiment of the present invention, the first separating film protrudes more than the second separating film at the end of the negative electrode structure (10). According to one embodiment of the present invention, the second separating film protrudes more than the first separating film at the end of the negative electrode structure (10).

In that the electrode assembly (1) according to one embodiment of the present invention forms the basic structure of the electrode assembly (1) by folding one negative electrode structure (10), the negative electrode structure (10) should not be excessively thick so that it can be flexibly folded, and a certain level of lithium metal, a negative electrode active material, should be secured in the negative electrode structure (10) in consideration of the performance of the battery. According to one embodiment of the present invention, the thickness of the lithium metal in the negative electrode structure (10) accounts for 50% to 90% based on the total thickness of the negative electrode structure (10). Specifically, the thickness of the lithium metal may range from 50% to 90%, more specifically from 55% to 85%, and more particularly from 60% to 80%. When the lithium metal satisfies the above-described thickness range, it can help improve the processability and functionality of the electrode assembly. According to one embodiment of the present invention, since the negative electrode structure (10) does not include a separate current collector, the thickness of the remaining portion excluding the lithium metal may refer to the thickness of two separating films.

According to one embodiment of the present invention, the thickness of the lithium metal may be from 10 um to 90 um. Specifically, the thickness of the lithium metal may be 10 um or more, 20 um or more, or 30 um or more, and may be 70 um or less, 80 um or less, or 90 um or less. The thickness of the lithium metal is not necessarily limited thereto, and may be appropriately adjusted according to the actual size of the battery.

In the electrode assembly (1) according to one embodiment of the present invention, unlike the negative electrode structure (10), the positive electrode is cut in consideration of characteristics such as material, and applied between the stack portions (10S) of the negative electrode structure (10). Although the positive electrode is distinct and independent from the negative electrode, in terms of, such as, including a current collector in addition to the positive electrode active material, the thickness may be adjusted in relation to the negative electrode or the negative electrode structure in consideration of the performance of the electrode. According to one embodiment of the present invention, the thickness of the positive electrode (20) is greater than the thickness of the negative electrode structure (10). According to one embodiment of the present invention, the thickness of the positive electrode (20) has a thickness of more than 100% and less than 400% with respect to the thickness of the negative electrode structure (10). Specifically, the thickness of the positive electrode (20) may range from 100% greater than and less than 400%, specifically from 150% to 350%, and more specifically from 200% to 300%. When the positive electrode satisfies the above-described thickness range, it can be suitably matched with the negative electrode structure.

An electrode assembly according to one embodiment of the present invention is applied to an electrochemical device. The electrochemical device may comprise any device that performs an electrochemical reaction. For example, the electrochemical device may be any kind of primary battery, secondary battery, fuel battery, solar battery or capacitor. If the electrochemical device is a secondary battery, the electrochemical device may be a lithium secondary battery, which may include a lithium metal secondary battery, a lithium ion secondary battery, a lithium polymer secondary battery or a lithium ion polymer secondary battery.

All simple variations or modifications of the present invention fall within the scope of the present invention, and the specific scope for which protection is sought is to be clear by the appended claims.

### [Reference Numerals]

1, 1': Electrode assembly (wherein 1' is a portion of the electrode assembly)
10: Negative electrode structure
10S: Stack portion
10F: Folding portion
11: Negative electrode (Lithium metal layer)
11A, 11A': Negative electrode tab (wherein 11A' is a longitudinally extended negative electrode tab)
12: Separating film (First and second separating films)
20: Positive electrode

## Claims

1. An electrode assembly comprising a negative electrode structure and a plurality of positive electrodes,
wherein the negative electrode structure comprises first and second separating films, and a lithium metal layer interposed between the first and second separating films,
the negative electrode structure includes a plurality of stack portions and a plurality of folding portions,
the electrode assembly has a structure in which the stack portion of the negative electrode structure and the positive electrode are stacked alternately and sequentially,
the negative electrode includes a plurality of negative electrode tabs projecting from the negative electrode structure more than the first and second separating films in the width direction, and
the number of negative electrode tabs is at least one less than the number of stack portions of the negative electrode structure.

2. The electrode assembly according to claim 1, wherein the negative electrode tab is integrally formed with the remaining portion of the negative electrode.

3. The electrode assembly according to claim 1, wherein the plurality of negative electrode tabs are located at only one end of both ends in the width direction of the negative electrode structure, and are side by side in the height direction of the electrode assembly.

4. The electrode assembly according to claim 1, wherein the positive electrode comprises a positive electrode tab projecting from the negative electrode structure more than the first and second separating films in the width direction.

5. The electrode assembly according to claim 1, wherein the negative electrode tabs are located on the stack portions of the negative electrode structure, and at least one stack portion without negative electrode tabs is present between the stack portions having the negative electrode tabs.

6. The electrode assembly according to claim 1, wherein one of the plurality of negative electrode tabs is located at a stack portion of the uppermost negative electrode structure, and the other of the plurality of negative electrode tabs is located at a stack portion of the bottommost negative electrode structure.

7. The electrode assembly according to claim 1, wherein at least one of the plurality of negative electrode tabs is a negative electrode tab of a structure extending longitudinally from a stack portion to the adjacent stack portion.

8. The electrode assembly according to claim 1, wherein two or more negative electrode tabs are not located on one stack portion of the negative electrode structure in the electrode assembly.

9. The electrode assembly according to claim 1, wherein for the stack portion of the negative electrode structure where the negative electrode tab is located, the length of the negative electrode tab is 50% or less of the length of the stack portion.

10. The electrode assembly according to claim 1, wherein the length of the folding portion in the negative electrode structure is from 2 to 10 times the sum of the thicknesses of the positive electrode and negative electrode structures.

11. An electrochemical device comprising the electrode assembly according to any one of claims 1 to 10.

12. The electrochemical device according to claim 11, wherein the electrochemical device is a lithium secondary battery.
